# EUROPÄISCHE PATENTSCHRIFT

(11) **EP 1 625 978 B1**
(45) Veröffentlichungstag und Bekanntmachung des Hinweises auf die Patenterteilung: **02.09.2009**
(21) Anmeldenummer: 05012961.8
(22) Anmeldetag: 16.06.2005
(51) Int. Cl.: B60R 19/34

(54) **Crashbox**
Crashbox
Absorbeur de choc

(30) Priorität: 13.08.2004 DE 102004039592
(43) Veröffentlichungstag der Anmeldung: 15.02.2006
(73) Patentinhaber: Benteler Automobiltechnik GmbH, 33104 Paderborn (DE)
(72) Erfinder: Hillekes, Bernhard, 33106 Paderborn (DE); Kröning, Achim, 33102 Paderborn (DE); Wang, Hui, 33102 Paderborn (DE); Roll, Michael, 33615 Bielefeld (DE); Kroeger, Dirk, 33165 Lichtenau (DE)
(74) Vertreter: Griepenstroh, Jörg

(56) Entgegenhaltungen:
- EP-A- 1 357 016
- US-B1- 6 293 587
- PATENT ABSTRACTS OF JAPAN Bd. 1999, Nr. 13, 30. November 1999 (1999-11-30) & JP 11 208392 A (NISSAN MOTOR CO LTD), 3. August 1999 (1999-08-03)

## Beschreibung

Die Erfindung betrifft eine Crashbox für den Stoßfänger eines Kraftfahrzeugs gemäß den Merkmalen im Oberbegriff von Patentanspruch 1.

Stoßfänger werden quer an Front und Heck eines Kraftfahrzeugs zwischen der die Karosserie abschließenden Kunststoffverschalung und dem Rahmen des Kraftfahrzeugs angeordnet. Um Beschädigungen der Fahrzeugstruktur bei Front- oder Heckaufprällen mit geringen Geschwindigkeiten zu vermeiden, werden Deformationselemente, so genannte Crashboxen, integriert. Crashboxen sind dünnwandige, in der Regel rechteckige Elemente aus Stahl, Aluminium oder Kunststoff. Sie können durch Fügen aus gepressten Blechschalen oder einteilig, beispielsweise als extrudiertes Aluminiumprofil, hergestellt sein.

Angeordnet zwischen Fahrzeuglängsträger und dem Stoßfängerquerträger absorbieren die Crashboxen die aus einem Anprall resultierende kinetische Energie, indem diese in Verformungsarbeit umgewandelt wird. Hierdurch soll vermieden werden, dass der Längsträger bleibend beschädigt wird, wenn ein kritisches Lastniveau überschritten wird.

Durch die DE 100 14 469 A1 zählt eine in der Praxis bewährte Crashbox zum Stand der Technik. Sie hat einen rechteckigen Querschnitt und ist aus einer Oberschale und einer Unterschale gefertigt. Diese Bauart zeichnet sich durch eine hohe Quersteifigkeit aus. Durch Sicken in den Crashboxen soll ein gezieltes Verformen an einem bestimmten Punkt eingeleitet werden. Die Crashbox ist über eine Flanschplatte an der Stirnseite des Längsträgers abgestützt. Über Verschraubungen in der Flanschplatte kann die Crashbox mit dem Längsträger verbunden werden. Hierzu ist auch im Bereich des Längsträgers ein entsprechender Anbindungsbereich, d.h. ein entsprechender Flansch erforderlich.

Die DE 296 22 715 U1 offenbart einen Prallträger für ein Kraftfahrzeug, der endseitig in den Stoßfängerquerträger einsteckbar und mit diesem durch quer eingesetzte Schrauben verbunden ist.

Teleskopierbare Dämpfer, die sich bei einem Anprall in die Längsträger schieben, sind beispielsweise aus der WO 99/15364 und der US 3,633,934 bekannt. Bei der DE 42 38 631 A1 werden z.B. Innen- und Außenrohr eines Dämpfers ineinander geschoben, wobei das Außenrohr allerdings wiederum einen Flansch an dem Längsträger abgestützt ist. Die DE 298 08 143 U1 offenbart eine Crashbox, die durch Querbolzen an den Längsträger fixiert ist. Die Anbindung erfolgt seitlich und nicht stirnseitig des Längsträgers, so dass bei dieser Form der Anbindung ebenso wie bei der stirnseitigen Abstützung durch Flansche erhöhter Bauraum erforderlich ist. Auch der US 6,293,587 offenbart eine Crashbox zur Eingliederung zwischen einem Längsträger auch Stoßfängerquerträger gemäß dem Oberbegriff des Anspruch 1.

Der Erfindung liegt die Aufgabe zugrunde, eine Crashbox zu schaffen, welche einerseits besonders Bauraum sparend, d.h. unter optimaler Ausnutzung des vorhandenen Bauraums an den Längsträgern fixierbar ist und andererseits ein reduziertes Eigengewicht besitzt.

Diese Aufgabe ist bei Crashboxen mit den Merkmalen des Patentanspruchs 1 dadurch gelöst, dass die Anbindung der Crashbox an den Längsträger ohne Flanschplatte erfolgen kann. Die erfindungsgemäße Crashbox ist in das stirnseitige Ende des Längsträgers eingesetzt und lediglich über eine nach außen gerichtete Materialausstellung oder eine Wandstärkenverdickung an der Stirnseite des Längsträgers abgestützt. Die Materialausstellung oder auch Wandstärkenverdickung dient einerseits als Anschlag, um in die Crashbox eingeleitete Anprallkräfte in die Längsträger zu übertragen. Andererseits ist eine exakt positionierte Materialausstellung bzw. Wandstärkenverdickung gleichzeitig eine Montagehilfe, um die Crashbox mit den Längsträgern über Bolzen zu verbinden. Die Anbindung der Crashboxen an den Längsträger erfolgt mittels Schraubbolzen, die in Y-Richtung und/oder Z-Richtung eingesetzt sein können. Die Z-Richtung beschreibt die Hochachse des Kraftfahrzeugs und die Y-Richtung die Querachse des Kraftfahrzeugs. Durch den Wegfall der Flanschplatten sowohl an den Crashboxen als auch an den Längsträger ergibt sich eine nicht unerhebliche Gewichtsreduzierung. Gleichzeitig steht durch den Wegfall der Flanschplatte in unmittelbarer Nähe der Crashboxen zusätzlicher Bauraum zur Verfügung. Die vorgesehene Deformation der Crashbox erfolgt grundsätzlich im Bereich ihres Deformationsabschnitts und nicht innerhalb des Längsträgers. Die zur Befestigung vorgesehenen Schraubbolzen sind folglich keine Scherbolzen, die bei Überbelastung eine Verlagerung der Crashbox in den Längsträger hinein erlauben. Die Schraubbolzen dienen zur Krafteinbringung der Normalkraft in die Überlappungsfläche der Crashbox und des Längsträgers zur Erzeugung einer Reibkraft, die der beim Crash eingeleiteten Kraft entgegen wirkt. Die an der Stirnseite des Längsträgers anliegende Materialausstellung bzw. Wandstärkenverdickung nimmt weitere Kräfte auf.

In der Ausführungsform des Patentanspruchs 2 liegt der Anschlag an den Längsseiten und/oder Querseiten des Längsträgers an. Grundsätzlich wird eine maximale Anlagefläche an der Stirnseite des Längsträgers bzw. in Umfangsrichtung der Crashbox angestrebt, um Anprallkräfte mit niedriger Flächenpressung über den Anschlag in die Wände des Längsträgers einleiten zu können. Zugleich soll der Querschnitt der Crashbox durch den Anschlag nicht wesentlich vergrößert werden. Die Materialausstellung oder die Wandstärkenverdickung kann den maximalen Außendurchmesser der Crashbox bestimmen (Patentanspruchs 3). Grundsätzlich kann die Crashbox einen beliebigen, insbesondere mehreckigen, insbesondere rechteckigen Querschnitt aufweisen. Auch runde Querschnitte sind möglich. Der Querschnitt kann sich über die Längserstreckung der Crashbox ändern, z.B. vergrößern, insbesondere aber verjüngen. Eine rechteckige Crashbox kann sich z.B. pyramidenstumpfförmig verjüngen. Bei einer solchen Ausführungsform ist die maximale Querschnittsfläche in der den Anschlag schneidenden Querebene gegeben. Grundsätzlich ist der Durchmesser des Befestigungsabschnitts der Crashbox kleiner als der Durchmesser im Bereich des Anschlags, da der Befestigungsabschnitt stirnseitig in den Längsträger gesteckt wird und damit innerhalb des Längsträgers angeordnet ist. Die Länge des Befestigungsabschnitts kann wesentlich kürzer sein, als die Länge des Deformationsabschnitts. Das ist ein Vorteil gegenüber Lösungen, bei denen die Crashbox bei einem Anprall in den Längsträger hinein geschoben wird. Bei der erfindungsgemäßen Crashbox kann die Querschnittsgestaltung unmittelbar in Anschluss an den Befestigungsabschnitt eine an die lokalen Anforderungen angepasste Querschnittsgestaltung besitzen, d.h. z.B. im Durchmesser verkleinert sein. In der Ausführungsform des Patentanspruchs 4 ist vorgesehen, dass ein zweiter Anschlag im Inneren des Längsträgers angeordnet ist, an welchem der Befestigungsabschnitt in der Einbaulage anliegt. Über den zusätzlichen zweiten Anschlag erfolgt eine weitere Abstützung der Crashbox im Inneren des Längsträgers. Auf diese Weise werden die angreifenden Anprallkräfte sowohl in den ersten Anschlag als auch in den zweiten Anschlag und damit mit geringerer Flächenpressung in den Längsträger eingeleitet. Der zweite Anschlag ist an dem Längsträger angeordnet.

Die Erfindung wird nachfolgend anhand eines in den schematischen Zeichnungen dargestellten Ausführungsbeispiels näher erläutert. Es zeigen:
- Figur 1: eine perspektivische Ansicht einer Crashbox, die in die Stirnseite eines Längsträgers eingesetzt ist;
- Figur 2: in perspektivischer Darstellung die Crashbox der Figur 1 mit halb geöffnetem Längsträger und
- Figuren 3 bis 5: zwei unterschiedliche Ausführungsformen von Materialausstellungen und einer Wandstärkenverdickung an dem Blechbauteil der Crashbox, das an der Stirnseite eines Längsträgers abgestützt ist.

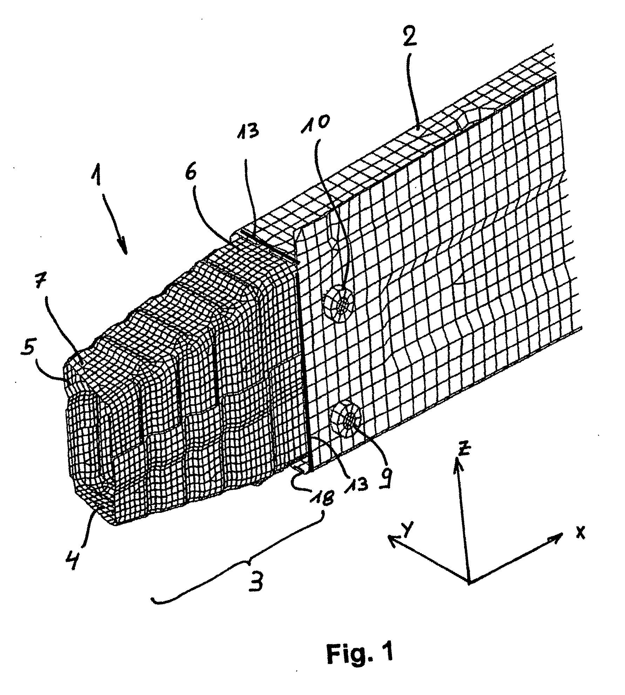

Figur 1 zeigt in perspektivischer Darstellung eine Crashbox 1. Die Crashbox 1 kommt als Energie absorbierendes Deformationselement zwischen einem nicht näher einem nicht näher dargestellten Stoßfängerquerträger und einem Längsträger 2 des Kraftfahrzeugrahmens zum Einsatz. Die Crashbox 1 besitzt einen als länglichen Hohlkörper gestalteten Deformationsabschnitt 3, der als dünnwandige Metallkonstruktion aus zwei U-förmig konfigurierten Schalenkörpern 4, 5 zusammengesetzt ist. Die Schalenkörper 4, 5 überlappen sich endseitig ihrer in Z-Richtung verlaufenden Schenkel und sind entlang dieser gefügt. In dem Ausführungsbeispiel greifen die Schenkel des oberen Schalenkörpers 5 in die Schenkel des unteren Schalenkörpers 4 innenseitig ein.

Der Deformationsabschnitt 3 ist pyramidenstumpfartig ausgebildet und verjüngt sich vom längsträgerseitigen Ende 6 zum stoßfängerquerträgerseitigen Ende 7 hin. Der Deformationsabschnitt 3 weist sowohl in Z-Richtung als auch in Y-Richtung verlaufende Sicken auf, die an den in Z-Richtung verlaufenden Längsseiten nach innen und an den in Y-Richtung verlaufenden Ober- und Unterseiten des Deformationsabschnitts 3 nach außen ausgestellt sind. Das Sickenbild ist variabel und kann je nach Anforderungen auch Sicken in X-Richtung aufweisen. Selbstverständlich ist es auch möglich, die Crashbox ohne Sicken auszugestalten.

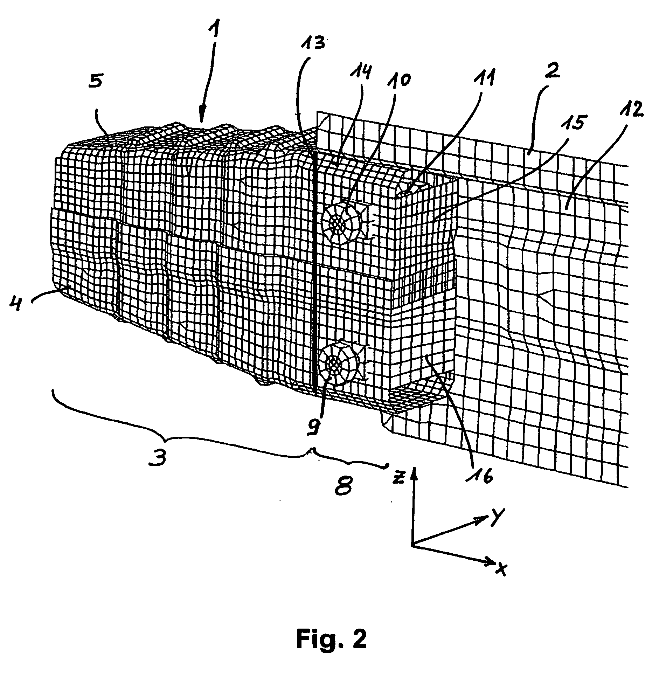

Aus der in Figur 2 dargestellten Perspektive ist zu erkennen, dass die Crashbox 1 einen sich an den Deformationsabschnitt 3 anschließenden Befestigungsabschnitt 8 aufweist, der in den Längsträger 2 eingesteckt ist und über Bolzen 9, 10, 11 in der Wandung 12 des Längsträgers 2 befestigt ist. Die Bolzen 9, 10, 11 sind in diesem Ausführungsbeispiel in Y-Richtung eingesetzt. Insgesamt sind vier Bolzen vorgesehen, die sich paarweise gegenüberliegen. Im Übergangsbereich zwischen dem Deformationsabschnitt 3 und dem Befestigungsabschnitt 8 ist ein Anschlag 13 ausgebildet. Der Anschlag 13 ist in den Figuren 1 und 2 als fett eingezeichnete Linie dargestellt. Der Anschlag 13 kann sowohl eine nach außen gerichtete Materialausstellung oder eine nach außen gerichtete Wandstärkenverdickung des Blechbauteils der Crashbox sein. Aus Figur 1 ist erkennbar, dass der Anschlag sowohl in Y- als auch in Z-Richtung verläuft, d.h. unter Ausschluss der Eckbereiche 14 die gesamte Crashbox 1 kragenartig umgibt. Die Eckbereiche 14 des Befestigungsabschnitts 8 sind abgeschrägt. Die Schenkel der Schalenköper 4, 5 sind an ihrem dem Stoßfängerquerträger abgewandten Ende über Querstege 15, 16 miteinander verbunden.

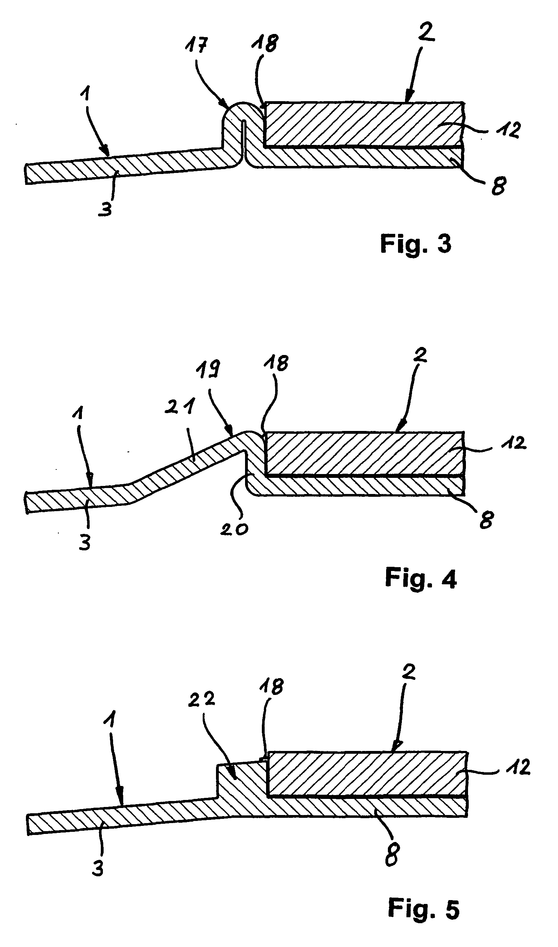

Die Figuren 3 bis 5 zeigen unterschiedliche mögliche Ausführungsformen eines Anschlags. Figur 3 zeigt eine Ausführungsform, bei welcher der Anschlag 17 eine nach außen gerichtete Materialausstellung ist, die an der Stirnseite 18 der Wandung 12 des Längsträgers 2 anliegt. Hinsichtlich der Gestaltung der Materialausstellung sind unterschiedlichste Varianten denkbar. In Figur 3 ist die Materialausstellung ein falzähnlicher Kragen.

Figur 4 zeigt eine weitere Möglichkeit, eine Materialausstellung eines Anschlags zu gestalten. Bei dieser Variante ist der Anschlag 19 nicht in Form einer Falzung realisiert, sondern im Querschnitt als dreieckförmige Ausstellung ausgebildet, wobei die Ausstellung anders als in der Ausführungsform der Figur 3 zwei zueinander unsymmetrisch verlaufende Schenkel 20, 21 aufweist. Der erste Schenkel 20 ist wie in der Ausführungsform der Figur 3 parallel zur Stirnseite 12 des Längsträgers 2 ausgerichtet, während der zweite Schenkel 21 rampenartig im Winkel auf den ersten Schenkel 20 zuläuft. Die Länge des zweiten Schenkels 21, der Steigungswinkel sowie die konkrete Gestaltung der Crashbox ist abhängig von dem eingesetzten Material, den damit einhergehenden Verformungseigenschaften und der gewünschten Verformungscharakteristik der Crashbox.

Die Ausführungsform der Figur 5 zeigt eine Variante, bei welcher die Schalenkörper aus einem Blechbauteil mit partiell unterschiedlicher Wandstärke gefertigt sind. Der Anschlag 22 ist bei dieser Variante als Wandstärkenverdickung ausgebildet, die ebenfalls an der Stirnseite 12 des Längsträgers 2 zur Anlage gelangt und zur Abstützung der Crashbox 1 dient.

Bei allen dargestellten Varianten wird ein besonders Bauraum sparender Anschlag angestrebt, der zwar eine optimale Abstützung der Crashbox 1 an dem Längsträger 2 ermöglicht, allerdings gleichzeitig einfach in der Fertigung und gering im Gewicht ist. Daher ragt die Crashbox 1 im Bereich des Anschlags 17, 21 nicht über den stirnseitigen Querschnitt des Längsträgers hinaus. Zusätzlicher Bauraum wird allenfalls durch die Köpfe der Bolzen erforderlich, die zur schraubtechnischen Befestigung der Crashbox 1 an den Längsträgern 2 erforderlich sind.

### Bezugszeichen:

- 1 -: Crashbox
- 2 -: Längsträger
- 3 -: Deformationsabschnitt v.1
- 4 -: unterer Schalenkörper v. 1
- 5 -: oberer Schalenkörper v. 1
- 6 -: längsträgerseitige Ende v. 3
- 7 -: stoßfängerquerträgerseitige Ende v. 3
- 8 -: Befestigungsabschnitt v. 1
- 9 -: Bolzen
- 10 -: Bolzen
- 11 -: Bolzen
- 12 -: Wandung von 2
- 13 -: Anschlag
- 14 -: Eckbereich v. 8
- 15 -: Quersteg v. 5
- 16 -: Quersteg v. 4
- 17 -: Anschlag
- 18 -: Stirnseite von 12
- 19 -: Anschlag
- 20 -: Schenkel v. 19
- 21 -: Schenkel v. 19
- 22 -: Anschlag

## Patentansprüche

1. Crashbox zur Eingliederung zwischen einem Längsträger und einem Stoßfängerquerträger eines Kraftfahrzeugs, welche einen Deformationsabschnitt (3) besitzt, der der Stirnseite (12) des Längsträgers (2) vorgelagert ist sowie einen in den Längsträger (2) eingreifenden Befestigungsabschnitt (8), der über die Wandungen des Befestigungsabschnitts (8) und die Wandungen (12) des Längsträgers (2) durchsetzende Bolzen (9, 10, 11) mit den Längsträgern (2) lösbar verbunden ist, wobei der Deformationsabschnitt (3) und der Befestigungsabschnitt (8) Längenabschnitte eines gemeinsamen Blechbauteils sind, wobei das Energieaufnahmevermögen der Crashbox (1) durch die maximale Stauchung des Deformationsabschnitts (3) bestimmt ist, **dadurch gekennzeichnet, dass** im Übergangsbereich zwischen dem Deformationsabschnitt (3) und dem Befestigungsabschnitt (8) eine nach außen gerichtete Materialausstellung oder Wandstärkenverdickung der Crashbox (1) vorgesehen ist, die als an der Stirnseite (18) des Längsträgers (2) anliegender Anschlag (13, 17, 19, 22) ausgebildet ist.

2. Crashbox nach Anspruch 1, **dadurch gekennzeichnet, dass** der Anschlag (13) an den Längsseiten und/oder Querseiten des Längsträgers (2) anliegt.

3. Crashbox nach Anspruch 1 oder 2, **dadurch gekennzeichnet, dass** die Materialausstellung oder die Wandstärkenverdickung den maximalen Außendurchmesser der Crashbox (1) bestimmt.

4. Crashbox nach einem der Ansprüche 1 bis 3, **dadurch gekennzeichnet, dass** ein zweiter Anschlag im Inneren des Längsträgers vorgesehen ist, an welchem der Befestigungsabschnitt (8) in der Einbaulage anliegt.

## Claims

1. Crash box to be incorporated between a longitudinal beam and a bumper crossmember of a motor vehicle, which has a deformation section (3), which is mounted before the face (12) of the longitudinal beam (2), as well as an attachment section (8), engaging with the longitudinal beam (2), which is removably connected with the longitudinal beam (2) via bolts (9, 10, 11) penetrating the walls of the attachment section (8) and the walls (12) of the longitudinal beam (2), wherein the deformation section (3) and the attachment section (8) are longitudinal sections of a common sheet metal component, wherein the energy absorption capacity of the crash box (1) is determined through the maximum compression of the deformation section (3), **characterised in that** there is provided, in the transition region between the deformation section (3) and the attachment section (8), an outwardly directed material formation or wall thickening of the crash box (1), which is formed as a stop (13, 17, 19, 22) abutting on the face (18) of the longitudinal beam (2).

2. Crash box according to Claim 1, **characterised in that** the stop (13) abuts on the longitudinal sides and/or transverse sides of the longitudinal beam (2).

3. Crash box according to Claim 1 or 2, **characterised in that** the material formation or the wall thickening determines the maximum outer diameter of the crash box (1).

4. Crash box according to one of Claims 1-3, **characterised in that** a second stop is provided in the interior of the longitudinal beam, on which the attachment section (8) abuts in the fitting position.

## Revendications

1. Caisson absorbeur de choc destiné à être intégré entre un longeron et une traverse de pare-chocs d'un véhicule automobile, qui possède un tronçon à déformation (3) placé en avant de la face frontale (12) du longeron (2), ainsi qu'un tronçon de fixation (8) qui s'engage dans le longeron (2) et qui est relié de façon détachable au longeron (2) au moyen de boulons (9, 10, 11) qui traversent les parois du tronçon de fixation (8) et les parois (12) du longeron (2), dans lequel le tronçon à déformation (3) et le tronçon de fixation (8) sont des tronçons en longueur d'un composant en tôle commun, la capacité d'absorption d'énergie du caisson absorbeur de choc (1) étant déterminée par l'écrasement maximum du tronçon à déformation (3),
**caractérisé en ce que**, dans la zone de transition entre le tronçon à déformation (3) et le tronçon de fixation (8), il est prévu un redressement du matériau ou un épaississement de la paroi, dirigé vers le haut, du caisson absorbeur de choc (1), qui est réalisé comme une butée (13, 17, 19, 22) appliquée contre la face frontale (18) du longeron (2).

2. Caisson absorbeur de choc selon la revendication 1, **caractérisé en ce que** la butée (13) est appliquée contre les côtés longitudinaux et/ou les côtés transversaux du longeron (2).

3. Caisson absorbeur de choc selon la revendication 1 ou 2, **caractérisé en ce que** le redressement de matériau ou l'épaississement de paroi détermine le diamètre extérieur maximum du caisson absorbeur de choc (1).

4. Caisson absorbeur de choc selon l'une des revendications 1 à 3, **caractérisé en ce qu'**il est prévu une seconde butée à l'intérieur du longeron, contre laquelle s'applique le tronçon de fixation (8) dans la position de montage.
